(19)

**Europäisches Patentamt**

**European Patent Office**

**Office européen des brevets**

(11)  **EP 3 188 087 A1**

(12)  # EUROPEAN PATENT APPLICATION

(43) Date of publication:
05.07.2017 Bulletin 2017/27

(51) Int Cl.:
**G06N 7/00** (2006.01) **G06N 99/00** (2010.01)
**G01C 21/36** (2006.01)

(21) Application number: **16207182.3**

(22) Date of filing: **28.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.12.2015 IL 24341615**

(71) Applicant: **Deutsche Telekom AG**
**53113 Bonn (DE)**

(72) Inventors:
• **Katz, Gilad**
**7624710 Rehovot (IL)**
• **Shabtai, Asaf**
**7684200 Hulda (IL)**
• **Rokach, Lior**
**8496500 Omer (IL)**

(74) Representative: **Maiwald Patentanwalts GmbH**
**Engineering**
**Elisenhof**
**Elisenstrasse 3**
**80335 München (DE)**

(54)  **APPLYING MATRIX FACTORIZATION TECHNIQUES FOR CONTEXT-BASED LOCATION PREDICTION**

(57) System and method for context based location prediction based on a matrix factorization model, according to which data from sensors is received and analyzed, to define a sparse matrix [i,j] for each context, where i denotes the source location and j denotes the destination location. A matrix factorization model is generated and the error between the predicted location and the actual location a user went to, is calculated while normalizing the predictions provided by the model, the distance of each predicted destination from the actual destination or the combination of predictions and distances. Then the matrix factorization model is trained using a machine learning process, the model is activated and a prediction of a location is generated using the activated model with the data received from sensors.

**EP 3 188 087 A1**

**Description**

**Field of the Invention**

The present invention relates to the field of location prediction. More specifically the invention relates to applying matrix factorization techniques for context-based location prediction.

**Background of the Invention**

Location prediction is the task of predicting the future locations of users in various time-frames (30 minutes, an hour, a day etc.). This technology, if applied successfully, paves the way to a plethora of personalized, context-aware services. For example, a user may receive coupons for restaurants in the vicinity of the lecture she will attend in an hour. Another example is the automated activation of the thermostat in one's home upon determining that one is likely to return home in within the next 30 minutes.

The three major difficulties in the field of location prediction are:

1. The sparsity of the data - due to the large number of possible contexts (day, hour, temperature, speed etc.) and locations, the need to produce predictions based on a limited amount of data is very common.
2. The integration of multiple contexts - even when all the various contexts (day, hour, temperature, speed etc.) are represented using a model, there is still the task of integrating the different models into one unified framework. This is particularly problematic as the amount of data available for each model can change drastically for each user.
3. Privacy problem - the need to maintain privacy, which may require that all data and calculations be stored and performed on a mobile device. This constraint makes many existing algorithms un-applicable.

SVD is a well-known matrix factorization method that gained much popularity following its successful application in the Netflix Challenge. In the domain of recommendation systems, it utilizes latent relations between users and items and represents them in a latent factor space of dimensionality.

SVD technique has some very important advantages relating to the field of location prediction such as: efficiency - the SVD solution requires less space and more efficient to calculation as there is no need to multiply matrices; the ability to easily add new contexts without needing to create new matrices; the ease with which X steps backwards can be taken into account - something that is very expensive in existing solution of location prediction and more. However, in order to apply the SVD in the domain of location prediction, two major challenges needs to be addressed. The first challenge is the representation of the problem, and the second is the definition of the error.

It is therefore an object of the present invention to provide a system and method for location prediction, which require less space and more efficient to calculations to overcome the sparsity problem and the privacy problem.

It is another object of the present invention to provide a system and method for location prediction, which integrates the different models into one unified framework easily and efficiently.

It is yet another object of the present invention to provide a system and method for context based location prediction using SVS technique.

Further objects and advantages of this invention will appear as the description proceeds.

**Summary of the Invention**

In one aspect, the present invention relates to a method for context based location prediction based on a matrix factorization model, wherein the method comprises the steps of: receiving data from sensors; analyzing the data and defining a sparse matrix [i,j] for each context, where i denotes the source location and j denotes the destination location; generating a matrix factorization model according to the formula:

$$\hat{r}_{u,i} = \mu + b_i + b_u + q_i^T \cdot p_u$$

wherein $\mu$ is the average rating, $b_s$ is the source location bias, $b_d$ is the destination location bias, $q_s$ is a vector of latent features for the source location and $p_d$ is a vector of latent features for the destination location; calculating the error between the predicted location and the actual location a user went to, according to one of the following three methods:

normalizing the predictions provided by the model;

normalizing the distance of each predicted destination from the actual destination; and
normalizing the combination of predictions and distances;

training the matrix factorization model in a machine learning process, according to:

$$b_s = b_s + \gamma \cdot (e - \lambda \cdot b_s)$$

$$b_d = b_d + \gamma \cdot (e - \lambda \cdot b_d)$$

$$q_s = q_s + \gamma (e_{ds} \cdot p_d - \lambda \cdot q_s)$$

$$p_d = p_d + \gamma (e_{ds} \cdot q_s - \lambda \cdot p_d)$$

wherein $\gamma$ is a learning step size; $\lambda$ is a regularization parameter; and e is the error;
activating the model; and generating a prediction of a location using the activated model with the received data from sensors.

In an embodiment of the invention, i and j in the sparse matrix [i, j] are vectors.

In an embodiment of the invention, the vectors contain context data.

In an embodiment of the invention, the training is iterative.

In another aspect the present invention related to a system for context based location prediction based on a matrix factorization model, comprising:

a processor which receives context data from sensors which are interfacing the surrounding of a user, analyses the data and represents the data in a format adapted to location prediction;

a location prediction matrix factorization model generator;

a location prediction generator, which generates a location predication based on the generated model and based on the analyzed context data received from the processor.

In an embodiment of the invention, the processor generates context data using dynamic context splitting.

In an embodiment of the invention, the location prediction matrix factorization model generator generates the model according to:

$$\hat{r}_{u,i} = \mu + b_i + b_u + q_i^T \cdot p_u$$

wherein $\mu$ is the average rating, $b_s$ is the source location bias, $b_d$ is the destination location bias, $q_s$ is a vector of latent features for the source location and $p_d$ is a vector of latent features for the destination location.

All the above and other characteristics and advantages of the invention will be further understood through the following illustrative and non-limitative description of embodiments thereof, with reference to the appended drawings.

Brief Description of the Drawings

- Fig. 1 schematically shows the system of the present invention according to an embodiment of the invention;
- Fig. 2 schematically shows the method of the present invention according to an embodiment of the invention;
- Fig. 3 shows the learning phase of the SVD algorithm;
- Fig. 4 shows a visual representation of the location prediction based matrix factorization model;

- Fig. 5 schematically shows an example of values of predictions of the model of the present invention in the training phase;
- Fig. 6 schematically shows an example of normalized values of predictions of the model of the present invention in the training phase;
- Fig. 7 schematically shows the pseudo-code of normalizing the predictions provided by the model of the invention;
- Fig. 8 schematically shows the pseudo-code of normalizing the distance of each predicted destination from the actual destination; and
- Fig. 9 schematically shows the pseudo-code of normalizing the combination of predictions and distances.

## Detailed Description of the Embodiments of the Invention

The present invention relates to applying matrix factorization techniques for context-based location prediction.

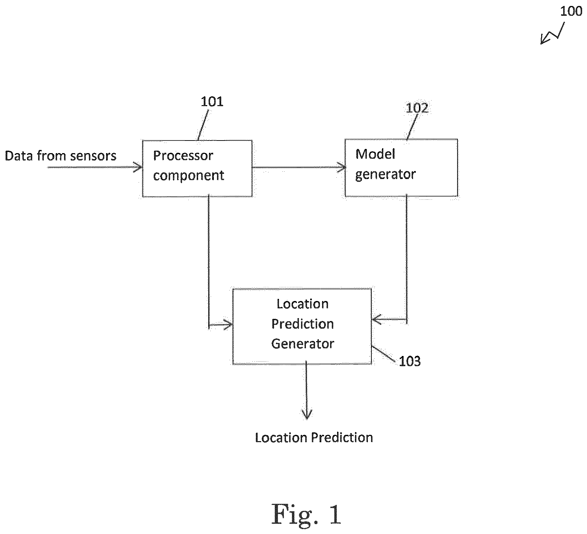

The present invention is a method and system for context based location prediction based on a matrix factorization model. The system of the invention is schematically described in Fig. 1. In system 100 a, receives data from sensor that are interfacing the surrounding of the user and analyses the data and represent the data in a format adapted to location prediction. Then a receives the analyzed data from the processor component 101 and generates the matrix factorization model adapted to location prediction. A location prediction generator 103 receives the analyzed data from the processor component 101 and the matrix factorization model from the model generator 102 and generated a prediction of a location.

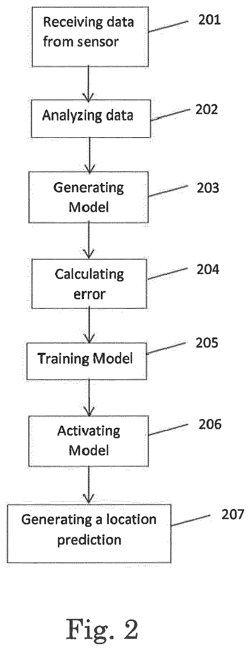

The method of the invention is schematically described in Fig. 2 and comprises the following steps: in step 101, the system receives data from sensors (for example data from sensors of a smartphone such as GPS); in step 202, a processor component analyzes the data and represents the data in a format adapted to the a location prediction. In step 203 a model generator generates a matrix factorization model, based on the analyzed data received from the processor component. In step 204 the processor component calculates the error between the predicted location and the actual location a user went to and in step 205 the matrix factorization model is trained and then activated in step 206. Eventually in step 207 a location prediction generator uses the activated model and the analyzed data received from the processor component and generates a prediction of a location.

The present invention addresses both of the abovementioned problems of sparsity and the integration of multiple contexts simultaneously by leveraging a technique called Singular Value Decomposition (SVD). This technique has been successfully applied in recent years in the domain of recommendation systems, where it has been utilized on highly sparse data representations. The present invention demonstrate how the problem of location prediction can be re-modeled so it is applicable for the SVD model, thus addressing both the problem of sparsity and the difficulty of integrating multiple contexts.

SVD is a well-known matrix factorization method that gained much popularity following its successful application in the Netflix Challenge. In the domain of recommendation systems, it utilizes latent relations between users and items and represents them in a latent factor space of dimensionality.

In its most popular version, SVD computes predictions for unknown items using the following base model:

$$\hat{r}_{u,i} = \mu + b_i + b_u + q_i^T \cdot p_u$$

Where $\mu$ is the average rating, $b_u$ and bi are the item and user biases (respectively), and qi and $p_u$ are vectors of latent features for the item and the user (respectively). The parameters of this model can be trained by a stochastic gradient descent algorithm:

$$b_i = b_i + \gamma \cdot (e - \lambda \cdot b_i)$$

$$b_u = b_u + \gamma \cdot (e - \lambda \cdot b_u)$$

$$q_i = q_i + \gamma (e_{ui} \cdot p_u - \lambda \cdot q_i)$$

$$p_u = p_u + \gamma (e_{ui} \cdot q_i - \lambda \cdot p_u)$$

Where $\gamma$ is the learning step size and $\lambda$ is a regularization parameter. e is the error (the difference between the prediction and the actual outcome) that is used to iteratively modify the various values of the parameters.

In recent years many versions of the algorithm have been proposed. The modifications to the basic algorithm include additional parameters and incremental learning.

The main advantages of the present invention over the other location prediction solution in the art are:

1) Efficiency - the SVD solution requires less space and more efficient to calculation as there is no need to multiply matrices;

2) A unique adaptation of the gradient descent calculation, to account for the fact that there is no fixed error (normalization is used, values below 0 are ignored etc.);

3) The ability to easily add new contexts without needing to create new matrices;

4) The ease with which X steps backwards can be taken into account - something that is very expensive in existing solution; and

5) Using dynamic context splitting method as a way to generate context and as a way to save space.

In order to apply the SVD in the domain of location prediction, two major challenges needs to be addressed. The first challenge is the representation of the problem, and the second is the definition of the error. Next each of the two challenges is addressed.

Representation of the problem:

The challenge is the need to represent the probability of transitioning from one location to another for each of the used contexts. This is done as follows:

1. In the first step, for each context, a sparse matrix [i,j] is defined, where i denotes the "source" location and j denotes the "destination" location.

2. In the second step, the representation can be adapted in order to represent more detailed contexts. For example, if the speed in which a user is moving is wished to be taken into account, the speed of the user (which is a numeric-continuous value) will undergo a process of *discretization.* Using this process, a numeric (continuous) value is transformed into one of several of possible discrete values. For example, the speed can be converted into one of four discrete values: [0], | 0-1], | 1-3] and |3-∞]. In this case, the value of the speed will be replaced by the index of the relevant discretized value, and integer of the range [0,3].

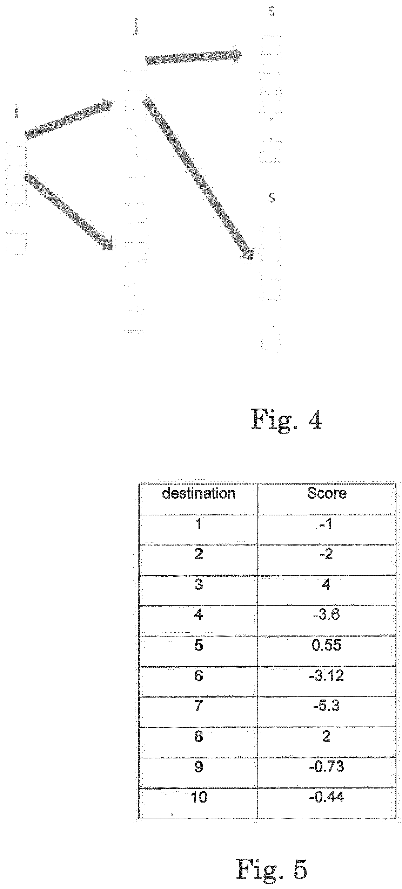

Once the speed (or any other context, for that matter) is represented in such a fashion, it can be easily assigned to the user's current and destination location. In the previous section it was shown that a transition from a source i to a destination j is represented using [i,j]. In order to represent the speed in this context, we simply add another set of parameters to this space matrix, presented by [i,j]→[s]. [s] will contain a set of several values (the number of values is equal to the number of possible discrete values for the context), and only the relevant values (those that match the relevant context) are updated at any given time. A visual representation of the model is presented in Fig. 4, which schematically shows a visual representation of the hierarchical data object used to store the speed context. i represents the "source" location, j represents the "destination" location and s represents the speed of the user (s is divided into "buckets" of various speeds).

3. An additional adaptation of the model is the representation of several previous locations in which the user has been. This can be represented as [[$i_1$, $i_2$ ... $i_n$,j], where $i_n$ denotes the most frequent location and $i_1$ denotes the earliest location denoted by the model of the present invention and j is the destination location. This representation can also be combined with the representation presented in section 2, above.

Eventually, the (adapted) model for predicting location is:

$$\hat{r}_{s,d} = \mu + b_s + b_d + q_i^T \cdot p_u$$

Where $\mu$ is the average rating, $b_s$ and $b_d$ are the source location and destination location biases (respectively), and $q_s$ and $p_d$ are vectors of latent features for the source location and destination location (respectively).

The parameters of the model of the present invention can be trained by a stochastic gradient descent algorithm:

$$b_s = b_s + \gamma \cdot (e - \lambda \cdot b_s)$$

$$b_d = b_d + \gamma \cdot (e - \lambda \cdot b_d)$$

$$q_s = q_s + \gamma (e_{ds} \cdot p_d - \lambda \cdot q_s)$$

$$p_d = p_d + \gamma (e_{ds} \cdot q_s - \lambda \cdot p_d)$$

Where $\gamma$ is the learning step size and $\lambda$ is a regularization parameter. e is the error (the difference between the prediction and the actual outcome) that is used to iteratively modify the various values of the parameters.

Modeling the error:

Unlike the domain of recommendation systems, where the error can be easily quantified as the distance between the predicted rating and the actual rating provided by the user, modeling the error in location prediction is more complicated. Three possible methods are presented for error calculation:

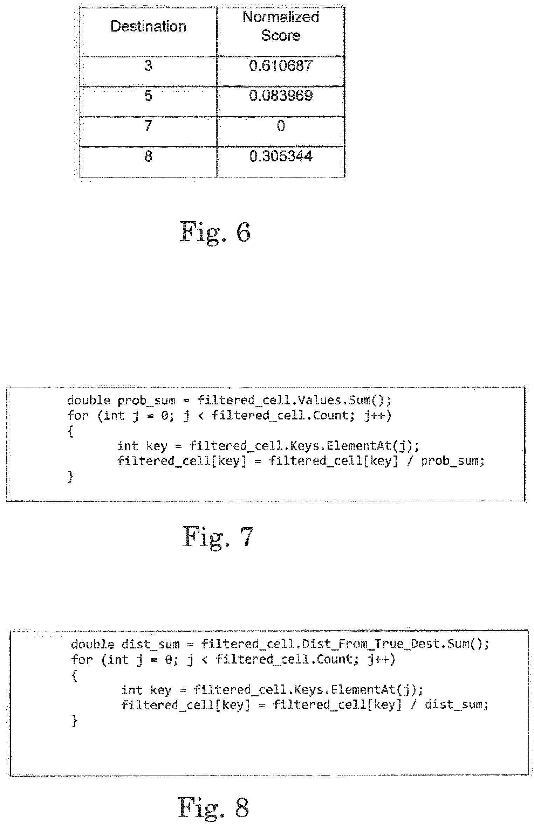

1. Normalizing the predictions provided by the model - for each possible destination, the system produces a prediction. This destination has a numeric value $[-\infty, \infty]$. These predictions are then normalized, and the normalized value is considered to be the error. Fig. 7 schematically shows the pseudo-code of this method.

2. Normalizing the distance of each predicted destination from the actual destination - by doing this, it is strive to minimize the distance between the predicted destination and the "true" destination. Predictions that result in larger error will produce larger errors, something that in turn would result in more significant modifications of their corresponding parameters.
Fig. 8 schematically shows the pseudo-code of this method.

3. Normalizing the combination of predictions and distances - for each possible destination, this approach combines both the numeric prediction provided by the model for that destination and its distance from the true destination. One possibility is multiplication (followed by the normalization of all values to 1) but other possibilities also exist.

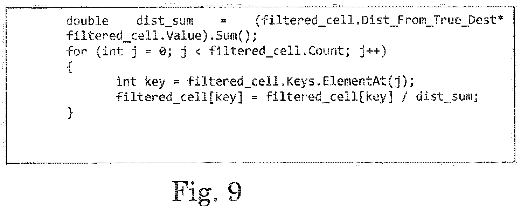

Fig. 9 schematically shows the pseudo-code of this method.
One of the three options is chosen every time the system generates a prediction for location according to the scenario and the parameters given in each time. In all cases the system sums all the values that are greater than 0 and divides all values by the sum. The goal is always to get to a point where the sum of normalized probability is 1. The difference is the way the score of each destination is calculated, which can be seen in the pseudo-codes of each method presented in Figs 7, 8 and 9 accordingly.

Following the normalization, the final stage consists of updating the parameters for each possible combination of the current location and destination. This is carried out as follows: for each destination that is incorrect (i.e. the user was not present in it within the time frame for which the algorithm provided the prediction), the error is the normalized error of the prediction. For the "true" destination location, the error is : -(1-err).
The logic of this step is as follows: in a perfect scenario, the algorithm would produce a normalized score of 1 for the correct destination and a normalized score of 0 for all other cells. As this scenario is the ideal scenario, the error for each incorrect destination is its distance from 0 - that is, the normalized prediction value. For the correct destination, it is aimed for the opposite -it is wished to increase the value of its parameters so they reach 1. For this reason, the error is the difference between 1 and the normalized predicted value. The sign of this error is opposite, as it is aimed to increase the value of the parameters instead of reducing it.

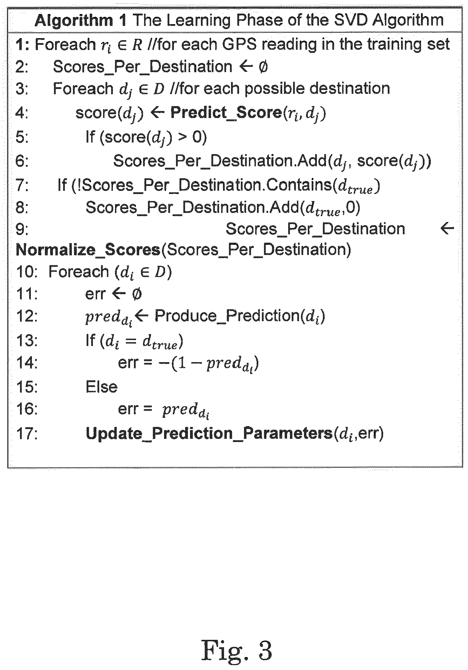

Fig. 3 schematically shows the algorithm describing the method of the Learning Phase of the SVD and the error calculation as a part of the algorithm.

Use case:

In this section an example is provided for context generation and location prediction based on the extracted representation.

Modeling the context

Assuming that it is interested to utilize the following contexts in the present invention location prediction application:

a. General context - the a-priori "score" assigned to the likelihood of the user moving from location X to location Y. This is modeled using Gen[i,j] where i and j are the current location and a prospective destination, respectively.
b. Duration - the amount of time the user spent in the current location (i.e. the time that passed since the user's arrival in the current location until "now" - the moment where the prediction is made). The duration is divided into "buckets" of 30 minutes each - 48 buckets overall (a duration of more than a day will be mapped to the last bucket). This context is modeled using Dur[i,j][t], where i and j are the current location and a prospective destination, respectively, and t is the index of the "bucket" to which the current reading was mapped.
c. Speed - the speed of the user at the moment that the sample was taken. Similarly to duration, the speed will be divided into "buckets" of various speeds. This context will be represented using Speed[i,j][s], where s is the index of the corresponding bucket.
d. Day - the day of the week in which the sample was taken. This context will be represented by Day[i,j][d]. Naturally, this context will contain seven buckets for each current location/destination combination.
e. Part of day - this context represents the time of day, with different hours divided into different sections. A possible partition, for example would be to create a new bucket for every two hours, thus creating 12 buckets overall. Buckets for different time spans can also be created (for example, from 2AM to 7 AM). This context will be represented by Pod[i,j][p].

Using these contexts, the prediction for each current location/destination will be calculated as follows:

$$\text{pred}[i, j] = \text{Gen}[i, j] + \text{dur}[i, j, t] + \text{speed}[i, j, s] + \text{day}[i, j, d] + \text{pod}[i, j, p]$$

Error Modeling:

This use case demonstrates the first option proposed above for the training of the prediction model - error normalization. Assuming that for a given user and a given current location, a prediction for ten possible destinations is produced (denoted 1-10). The values of these predictions are described in Fig. 5.
Given that this is the training phases of the model, it is determined that the "correct" prediction is destination #7.
The first step of the model is to retrieve all the destinations whose prediction value is greater than 0. The reason for determining 0 as a minimum, except for the fact that it is complicated to calculate all the other thousands or more destination in the matrix, is that using all possible destinations would " skew the curve" and make the top destinations to have smaller differences. Finally, this prevents the divergence of the function.
Therefore, destinations 3, 5 and 8 will be retrieved. Since destination 7's prediction value is smaller than 0, it was only added due to its being the true destination, with a predicted value of 0. The normalized prediction scores of these four destinations are shown in Fig. 6.
Therefore, the error for destination 7 would be -1 and the error for the other three destinations will be their normalized scores. Finally, the parameters of the corresponding locations will be updated. Assuming that the current location's ID number is 11. For destination 3, for example, the parameters will be updated in the following manner:

$$b[11,3] = b[11,3] - \gamma \cdot (0.610687 - \lambda \cdot b[11,3])$$

$$\text{dur}[11,3,t] = \text{dur}[11,3,t] - \gamma \cdot (0.610687 - \lambda \cdot \text{dur}[11,3,t])$$

$$\text{speed}[11,3,s] = \text{speed}[11,3,s] - \gamma \cdot (0.610687 - \lambda \cdot \text{speed}[11,3,s])$$

$$day[11,3,d] = day[11,3,d] - \gamma \cdot (0.610687 - \lambda \cdot day[11,3,d])$$

$$pod[11,3,p] = pod[11,3,p] - \gamma \cdot (0.610687 - \lambda \cdot pod[11,3,p])$$

This process is carried out for every GPS reading and repeated for multiple iterations until the model converges (i.e. the error of the model ceases to decrease in a significant manner).

The processor component generates new contexts and filters non-suitable samples using a novel method of method dynamic context splitting.

While it is interested in utilizing many different contexts of the data in order to improve the accuracy of the location prediction, a large number of contexts also inevitably increases data sparsity. The reason is clear - a larger number of contexts created more possible unique context combination and this leads to spreading the available information "thinner".

The dynamic partitioning of context method overcomes this problem. This approach enables to create high granularity where multiple data points are available and low granularity when the data is sparse. The context generation is done automatically and it can be modified following the obtainment of additional information.

The implementation according to one embodiment of the invention is as follows:

a) Setting all the contexts at their maximal degrees of granularity (i.e. the maximal degree of specificity as was defined by the system's parameters). The following steps are then applied:

b) All contexts for which there are no data points are merged with adjacent contexts. By adjacent we mean consecutive values or values that are defined closest using a predefined metric. This process is done iteratively.

c) For all remaining contexts, a chi-square test is used to determine whether a given pair of contexts are sufficiently similar to be merged. This is done in the following manner for each pair of contexts:

- For each pair of *source and destination locations* a unique identifier is assigned
- For each context, the number of times the users (or user, if this is calculated on the user level) have transitioned from the the source to the the destination is counted, in that particular context.
- All unique identifiers that have at least a single movement are included in the list of the items that are to be examined.
- For each contexts, the unique IDs and the number of occurrences are represented using an array of $n$ cells, where $n$ is the number of IDs and the value of each cell is the number of occurrences.
- These two arrays are compared using a statistical test (in this case, paired chi-squared test) to determine whether they are similar above a predefined threshold. If they are, the two contexts are joined.

d) The process is iterative and will continue to be applied on all contexts as long as a single merging took place.

Dealing with partial contextual match:

As the merging of the contexts takes place during the training of the prediction model, it is possible that during the test phase a combination of contexts that is not represented fully by the current context representation will be encountered. For example, we may combine the contexts [speed between 1-3 km/h] and [day=Thursday], but encounter a case where the user has a speed of 2km/h on a Friday.

two possible methods for dealing with this case are implemented:

a) Ignore all contexts that do not have a full match - in the example presented above, this will lead to the day and speed contexts to be ignored in the prediction process.

b) Enable partial matching - in this case all contexts that have a partial match to the context of the analyzed data point is included. In the above example, this will lead to the inclusion of two contexts: the joined "[speed between 1-3 km/h] and [day=Thursday]" context and the "[day=Friday]" context.

It should be pointed out that this situation is temporary, because a sufficient number of such samples will lead to a different joining of contexts the next time the model is retrained.

**Claims**

1. A method for context based location prediction based on a matrix factorization model, said method comprises the steps of:

   a. receiving data from sensors;
   b. analyzing said data and defining a sparse matrix [i,j] for each context, where i denotes the source location and j denotes the destination location;
   c. generating a matrix factorization model according to the formula:

   $$\hat{r}_{u,i} = \mu + b_i + b_u + q_i^T \cdot p_u$$

   wherein $\mu$ is the average rating, $b_s$ is the source location bias, $b_d$ is the destination location bias, $q_s$ is a vector of latent features for said source location and $p_d$ is a vector of latent features for said destination location;
   d. calculating the error between the predicted location and the actual location a user went to, according to one of the following three methods:

      i. normalizing the predictions provided by the model;
      ii. normalizing the distance of each predicted destination from the actual destination; and
      iii. normalizing the combination of predictions and distances;

   e. training said matrix factorization model in a machine learning process, according to:

   $$b_s = b_s + \gamma \cdot (e - \lambda \cdot b_s)$$

   $$b_d = b_d + \gamma \cdot (e - \lambda \cdot b_d)$$

   $$q_s = q_s + \gamma (e_{ds} \cdot p_d - \lambda \cdot q_s)$$

   $$p_d = p_d + \gamma (e_{ds} \cdot q_s - \lambda \cdot p_d)$$

   wherein $\gamma$ is a learning step size;
   $\lambda$ is a regularization parameter; and
   e is the error;

   f. activating said model; and
   g. generating a prediction of a location using said activated model with said received data from sensors.

2. A method according to claim 1, wherein i and j in said sparse matrix [i, j] are vectors.

3. A method according to claim 2, wherein said vectors contain context data.

4. A method according to one of the preceding, wherein said training is iterative.

5. A system for context based location prediction based on a matrix factorization model, comprising:

   a. a processor which receives context data from sensors which are interfacing the surrounding of a user, analyses said data and represents said data in a format adapted to location prediction;
   b. a location prediction matrix factorization model generator;
   c. a location prediction generator, which generates a location predication based on said generated model and based on said analyzed context data received from said processor.

**6.** A system according to claim 5, wherein said processor generates context data using dynamic context splitting.

**7.** A system according to claim 5 or 6, wherein the location prediction matrix factorization model generator generates said model according to:

$$\hat{r}_{u,i} = \mu + b_i + b_u + q_i^T \cdot p_u$$

wherein $\mu$ is the average rating, $b_s$ is the source location bias, $b_d$ is the destination location bias, $q_s$ is a vector of latent features for said source location and $p_d$ is a vector of latent features for said destination location.

100

101

102

Data from sensors → Processor component → Model generator

Location Prediction Generator

103

Location Prediction

Fig. 1

Fig. 2

**Algorithm 1** The Learning Phase of the SVD Algorithm

1: Foreach $r_i \in R$ //for each GPS reading in the training set

2:     Scores_Per_Destination $\leftarrow \emptyset$

3:     Foreach $d_j \in D$ //for each possible destination

4:         score($d_j$) $\leftarrow$ **Predict_Score**($r_i, d_j$)

5:         If (score($d_j$) > 0)

6:             Scores_Per_Destination.Add($d_j$, score($d_j$))

7:     If (!Scores_Per_Destination.Contains($d_{true}$))

8:         Scores_Per_Destination.Add($d_{true}$,0)

9:                     Scores_Per_Destination     $\leftarrow$
**Normalize_Scores**(Scores_Per_Destination)

10: Foreach ($d_i \in D$)

11:     err $\leftarrow \emptyset$

12:     $pred_{d_i} \leftarrow$ Produce_Prediction($d_i$)

13:     If ($d_i = d_{true}$)

14:         err $= -(1 - pred_{d_i})$

15:     Else

16:         err $= pred_{d_i}$

17:     **Update_Prediction_Parameters**($d_i$,err)

# Fig. 3

Fig. 4

| destination | Score |
|:-----------:|:-----:|
| 1 | -1 |
| 2 | -2 |
| 3 | 4 |
| 4 | -3.6 |
| 5 | 0.55 |
| 6 | -3.12 |
| 7 | -5.3 |
| 8 | 2 |
| 9 | -0.73 |
| 10 | -0.44 |

Fig. 5

| Destination | Normalized Score |
|:-----------:|:----------------:|
| 3 | 0.610687 |
| 5 | 0.083969 |
| 7 | 0 |
| 8 | 0.305344 |

Fig. 6

```
double prob_sum = filtered_cell.Values.Sum();
for (int j = 0; j < filtered_cell.Count; j++)
{
        int key = filtered_cell.Keys.ElementAt(j);
        filtered_cell[key] = filtered_cell[key] / prob_sum;
}
```

Fig. 7

```
double dist_sum = filtered_cell.Dist_From_True_Dest.Sum();
for (int j = 0; j < filtered_cell.Count; j++)
{
        int key = filtered_cell.Keys.ElementAt(j);
        filtered_cell[key] = filtered_cell[key] / dist_sum;
}
```

Fig. 8

```
double    dist_sum    =    (filtered_cell.Dist_From_True_Dest*
filtered_cell.Value).Sum();
for (int j = 0; j < filtered_cell.Count; j++)
{
        int key = filtered_cell.Keys.ElementAt(j);
        filtered_cell[key] = filtered_cell[key] / dist_sum;
}
```

Fig. 9

**EP 3 188 087 A1**

EUROPEAN SEARCH REPORT

Application Number

EP 16 20 7182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chen Cheng ET AL: "Where You Like to Go Next: Successive Point-of-Interest Recommendation", IJCAI '13 Proceedings of the Twenty-Third international joint conference on Artificial Intelligence, 9 August 2013 (2013-08-09), pages 2605-2611, XP055373523, ISBN: 978-1-57735-633-2 Retrieved from the Internet: URL:https://www.cse.cuhk.edu.hk/lyu/_media/publications/ccheng_ijcai13.pdf?id=home&cache=cache [retrieved on 2017-05-16] | 5,6 | INV. G06N7/00 G06N99/00 G01C21/36 |
| Y | * abstract * * page 2605, left-hand column, line 1 - page 2609, left-hand column, last line * ----- | 1-4,7 | |
| Y | KOREN Y ET AL: "Matrix Factorization Techniques for Recommender Systems", COMPUTER, IEEE COMPUTER SOCIETY, USA, vol. 42, no. 8, 1 August 2009 (2009-08-01), pages 30-37, XP011271733, ISSN: 0018-9162, DOI: 10.1109/MC.2009.263 | 1-4,7 | TECHNICAL FIELDS SEARCHED (IPC) G06N G01C |
| A | * abstract * * page 32, left-hand column, line 1 - page 33, right-hand column, last line * ----- -/-- | 5,6 | |

The present search report has been drawn up for all claims

| Place of search | Date of completion of the search | Examiner |
|---|---|---|
| The Hague | 18 May 2017 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

17

Europäisches
Patentamt

European
Patent Office

Office européen
des brevets

**EUROPEAN SEARCH REPORT**

Application Number

EP 16 20 7182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FUKANO JUN ET AL: "A next location prediction method for smartphones using blockmodels", 2013 IEEE VIRTUAL REALITY (VR), IEEE, 18 March 2013 (2013-03-18), pages 1-4, XP032479496, ISSN: 1087-8270, DOI: 10.1109/VR.2013.6549434 ISBN: 978-1-4673-4795-2 [retrieved on 2013-06-27] * abstract * * page 1, left-hand column, line 1 - page 2, right-hand column, last line * | 1-7 | |
| A | DANIEL ASHBROOK ET AL: "Using GPS to learn significant locations and predict movement across multiple users", PERSONAL AND UBIQUITOUS COMPUTING, vol. 7, no. 5, 1 October 2003 (2003-10-01), pages 275-286, XP055270363, GB ISSN: 1617-4909, DOI: 10.1007/s00779-003-0240-0 * the whole document * | 1-7 | |

TECHNICAL FIELDS
SEARCHED      (IPC)

The present search report has been drawn up for all claims

| Place of search | Date of completion of the search | Examiner |
|---|---|---|
| The Hague | 18 May 2017 | Totir, Felix |

EPO FORM 1503 03.82 (P04C01)